# FASCICULE DE BREVET EUROPEEN

(11) **EP 0 669 291 B1**
(45) Date de publication et mention de la délivrance du brevet: **06.05.1998**
(21) Numéro de dépôt: 94450008.1
(22) Date de dépôt: 19.12.1994
(51) Int. Cl.: C03C 14/00

(54) **Dispositif de fabrication de matériaux composites à matrice vitreuse ou vitro-céramique renforcée de fibres**
Vorrichtung zur Herstellung von Verbundwerkstoffen mit faserverstärkter Glas- oder Glaskeramikmatrix
Apparatus for making composite materials with fibre reinforced glass or glass ceramic matrix

(30) Priorité: 21.12.1993 FR 9315765
(43) Date de publication de la demande: 30.08.1995
(73) Titulaire: AEROSPATIALE SOCIETE NATIONALE INDUSTRIELLE, Société Anonyme, 75781 Paris Cedex 16 (FR)
(72) Inventeur: Darrieux, Jean-Louis, F-33160 Saint Médard en Jalles (FR); Larnac, Guy, F-33160 Saint Medard en Jalles (FR)
(74) Mandataire: Thébault, Jean-Louis

(56) Documents cités:
- EP-A- 0 117 594
- EP-A- 0 557 140
- GB-A- 2 041 322
- US-A- 4 960 451
- US-A- 4 976 761

## Description

La présente invention a trait à la réalisation de matériaux composites à matrice vitreuse ou vitro-céramique renforcée de fibres et plus précisément de matériaux composites obtenus par bobinage de fibres pré-imprégnées et rigidification par traitement thermique.

De tels matériaux, élaborés à partir de fibres de carbure de silicium ou de carbone par exemple, sont plus particulièrement destinés à des applications dans le domaine aéronautique ou spatial nécessitant une haute tenue en température, ainsi qu'au plan des contraintes mécaniques.

Deux techniques connues permettent d'obtenir ce type de matériau composite.

Suivant une première technique, on réalise ces matériaux composites par bobinage à froid sur un mandrin approprié de fibres pré-imprégnées, puis le mandrin bobiné est placé dans un four pour ramollir la matrice vitreuse ou vitro-céramique, après quoi le matériau se rigidifie lors du refroidissement du four.

Cette technique ne donne pas une compaction et une homogénéité optimales du matériau composite du fait du bobinage à froid.

Suivant une seconde technique décrite dans la demande de brevet européen N° 0.557.140 déposée au nom de la Demanderesse, les fibres pré-imprégnées sont déposées au contact à l'aide d'un galet presseur devant lequel on chauffe localement pour fondre la matrice vitreuse sous-jacente sur lesquelles sont pressées les fibres.

Les inconvénients de ce procédé résident dans l'impossibilité de tendre les fibres au cours de leur dépose et dans le fait que le matériau composite subit, tout au long de la dépose, un choc thermique local préjudiciable à la qualité de la céramisation de la matrice.

Par ailleurs, on connaît, par le document US 4 976 761, une installation destinée à bobiner sous tension des fibres pré-imprégnées sur un mandrin disposé dans un four. A cet effet, les fibres, préalablement chauffées, sont délivrées sous tension contrôlée et à poste fixe en regard d'un orifice du four dans lequel le mandrin est entraîné en rotation et peut être déplacé axialement.

Si un tel dispositif permet d'obtenir des matériaux composites dans des conditions assurant une bonne compacité et une bonne céramisation de la matrice, il ne peut convenir, ni pour le bobinage de pièces allongées, ni pour le bobinage de fibres sous des angles, par rapport à l'axe du mandrin, substantiellement inférieurs à 90°.

En effet, la délivrance des fils s'effectuant à poste fixe et sensiblement orthogonalement à l'axe du mandrin, le bobinage d'un mandrin de longueur relativement importante est exclu car impliquant un dimensionnement excessif du four puisque le mandrin doit défiler d'un bout à l'autre devant l'orifice par où pénètrent les fibres dans le four. Quant au bobinage des fibres sous des angles substantiellement inférieurs à 90°, il est totalement impossible puisque le mandrin peut seulement se déplacer axialement, c'est-à-dire orthogonalement aux fibres pénétrant dans le four.

La présente invention vise à pallier les inconvénients d'un tel dispositif en proposant des moyens propres à assurer, dans de semblables conditions de tension et température, le bobinage de mandrins pouvant avoir une longueur importante et/ou la dépose des fibres sous des angles variables.

A cet effet, l'invention a pour objet un dispositif de fabrication de matériaux composites à matrice vitreuse ou vitro-céramique renforcée de fibres, par bobinage sur un mandrin de fibres pré-imprégnées des constituants de ladite matrice, comprenant un four muni de moyens d'accès pour introduire et retirer un mandrin de bobinage, des moyens pour entraîner le mandrin en rotation autour de son axe à l'intérieur du four, des moyens pour délivrer au mandrin à l'intérieur du four des fibres à partir de bobines débitrices disposées à l'extérieur, via un moyen de passage ménagé dans la paroi dudit four et des moyens pour commander et contrôler la délivrance des fibres et l'entraînement en rotation du mandrin, ledit dispositif étant caractérisé en ce qu'il comporte :
- un moyen de passage des fibres dans la paroi du four constitué par une fente parallèle à l'axe du mandrin,
- une tête de délivrance, à vitesse et tension déterminées, des fibres au mandrin, via ladite fente, mobile en regard de ladite fente, et
- des moyens pour commander et contrôler les moyens d'entraînenement du mandrin et la tête de délivrance des fibres, en fonction des paramètres de bobinage.

De préférence, le four comporte des moyens d'occultation de la fente de passage des fibres en dehors de l'endroit d'introduction des fibres.

Suivant un mode de réalisation, lesdits moyens d'occultation sont constitués d'une réglette masquant la fente, montée coulissante le long de cette dernière en étant entraînée par une pièce de liaison solidaire en déplacement de la tête de bobinage des fibres, ladite réglette étant munie d'une fenêtre de passage desdites fibres.

Suivant un autre mode de réalisation, lesdits moyens d'occultation sont constitués de languettes, individuelles, juxtaposées, relevables, masquant la fente et soulevées au passage d'une pièce de liaison solidaire en déplacement de la tête de bobinage des fibres et munie d'une fenêtre de passage desdites fibres.

Suivant encore un autre mode de réalisation, lesdits moyens d'occultation sont constitués de languettes individuelles, juxtaposées, montées basculantes autour d'un axe parallèle à l'un des bords de la fente et escamotées par une pièce de liaison solidaire en déplacement de la tête de bobinage des fibres et munie d'une fenêtre de passage desdites fibres.

Suivant encore un autre mode de réalisation, lesdits moyens d'occultation sont constitués de lèvres en regard et en contact, en matériau souple approprié, traversées par un conduit de guidage des fibres, porté par la tête de bobinage, cette dernière étant montée à la fois mobile parallèlement à la fente et rotative autour d'un axe orthogonal à l'axe de la fente, de manière à faire varier l'angle formé entre ledit axe de la fente et ledit conduit de guidage traversant ladite fente.

Le dispositif de l'invention permet, grâce au déplacement de la tête de bobinage en regard de la fente d'introduction des fibres dans le four, laquelle fente peut s'étendre sur toute la longueur du four, de bobiner des fibres sur un mandrin pouvant être de longueur relativement importante sans avoir à surdimensionner le four et permet également d'effectuer des bobinages sous des angles de dépose, par rapport à l'axe du mandrin, pouvant s'étager entre 90°, ce qui correspond à un bobinage de type circonférentiel, et un angle compris entre 90° et quelques dizaines de degrés. Le dispositif de l'invention permet notamment de bobiner sous des angles de l'ordre de ± 45°.

Les fibres, par exemple des fibres de verre, de silice, de carbone, de SiCO, de SiCN, des fibres céramiques, ou autres, sont bobinées sur un même mandrin, avec ou sans tension, suivant un même angle de bobinage ou suivant divers angles.

La matrice vitreuse ou vitro-céramique peut être constituée par exemple d'au moins un oxyde de type SiO₂, Al₂O₃, ZrO₂, B₂O₃, ou d'oxydes alcalins ou alcalino-terreux.

Avantageusement, suivant la nature de la matrice, ladite atmosphère dans laquelle s'opèrent le bobinage et le refroidissement est une atmosphère neutre, par exemple d'azote.

Le produit composite obtenu selon le procédé peut être le produit fini recherché, le mandrin de bobinage étant alors dimensionné et conformé en conséquence, ledit produit fini étant un objet tubulaire. Il peut être également un semi-produit, auquel cas il sera ultérieurement découpé en éléments de formes et dimensions appropriées au produit fini désiré.

Dans ce dernier cas, le mandrin de bobinage est également configuré en fonction des formes et dimensions des produits finis désirés.

D'autres caractéristiques et avantages ressortiront de la description qui va suivre de modes de réalisation du dispositif de l'invention, description donnée à titre d'exemple uniquement et en regard des dessins annexés sur lesquels :
- Figure 1 est une vue schématique en coupe axiale verticale d'un dispositif conforme à l'invention ;
- Figure 2 est une vue de gauche du dispositif de la figure 1, et
- Figures 3a à 3e illustrent divers modes de réalisation de moyens d'occultation de la fente de passage des fibres du four des figures 1 et 2.

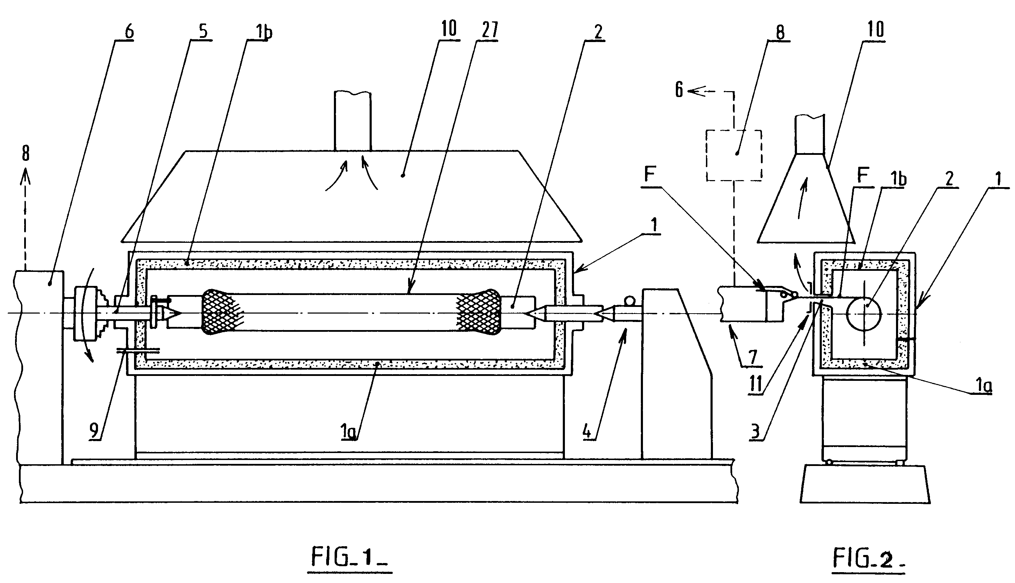

Sur les figures 1 et 2, on a représenté en 1 un four de dimensions appropriées pour accueillir un mandrin cylindrique 2 de forme allongée.

Pour permettre l'introduction du mandrin 2 dans le four et son retrait, le four 1 est constitué approximativement d'une demi-coquille inférieure 1a et d'une demi-coquille supérieure 1b, formant un parallélépipède rectangle dans le plan de jonction duquel est ménagée, sur l'un des flancs du four, un passage en forme de fente étroite 3 parallèle au mandrin 2 en place dans le four.

Le mandrin 2 est maintenu entre une poupée fixe 4 et une poupée mobile 5 entraînée en rotation par un moteur symbolisé en 6.

Les fibres F sont délivrées au mandrin 2, via la fente de passage 3, par une tête de bobinage conventionnelle 7, par exemple une tête à six fils en parallèle, apte à effectuer un bobinage sous une tension déterminée, pouvant être nulle et réglable. La tête 7 se déplace en regard et à distance de la fente 3 et est commandée, ainsi que le moteur 6, par un poste 8 de commande et contrôle des étapes de bobinage (angle de bobinage, nombre de couches, tension des fibres). Les moyens pour réaliser un tel déplacement à l'horizontale d'une tête de bobinage telle que la tête 7 sont conventionnels et ne seront pas décrits en détail.

Le four 1 est également muni de moyens 9 d'introduction d'un gaz neutre, par exemple de l'azote, et d'une hotte aspirante 10 de récupération des fuites hors du four, agencée de façon à s'étendre sur toute la longueur de la fente 3, à l'aplomb de celle-ci.

En outre, étant donné les dimensions de la fente 3, il est avantageusement prévu au droit de la fente, extérieurement au four, un moyen 11 d'occultation de la fente autorisant le passage des fibres F en un endroit quelconque le long de la fente.

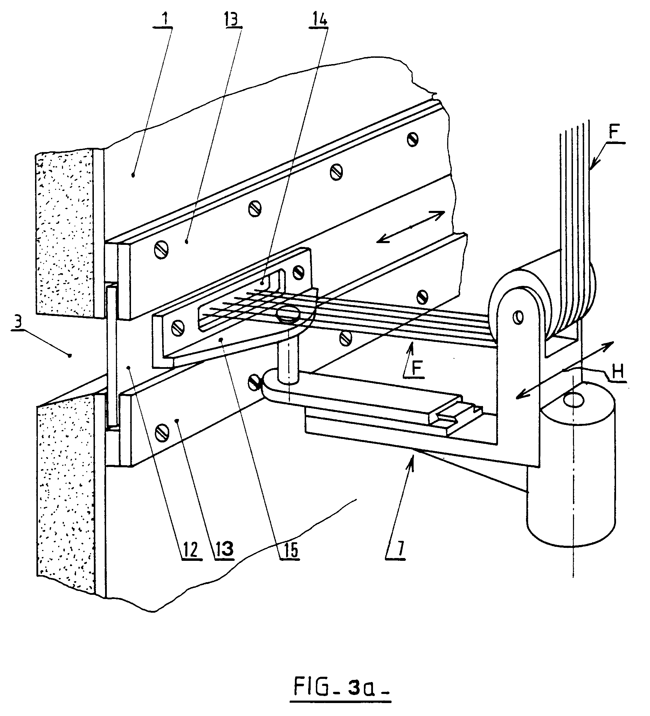

La figure 3a représente en vue partielle en perspective un premier mode de réalisation d'un tel moyen 11 constitué d'une réglette métallique coulissante 12, plaquée en regard de la fente 3 en étant maintenue et guidée par des coulisses 13 rapportées sur la face externe du four 1.

Dans la réglette 12 est ménagée une fenêtre horizontale 14 de dimension suffisante pour le passage de la nappe des fils (F) présentée par la tête de bobinage 7 qui se déplace suivant la double flèche H.

En regard de la fenêtre 14 est fixée une pièce en équerre 15 de liaison de la réglette 12 à la tête 7 afin de lier le déplacement de la réglette 12 à celui de la tête en vue de présenter constamment les fils (F) en regard de la fenêtre 14, la pièce 15 étant munie d'un passage en correspondance avec la fenêtre.

La réglette 12 peut être un ruban enroulé et déroulé automatiquement à ses deux extrémités.

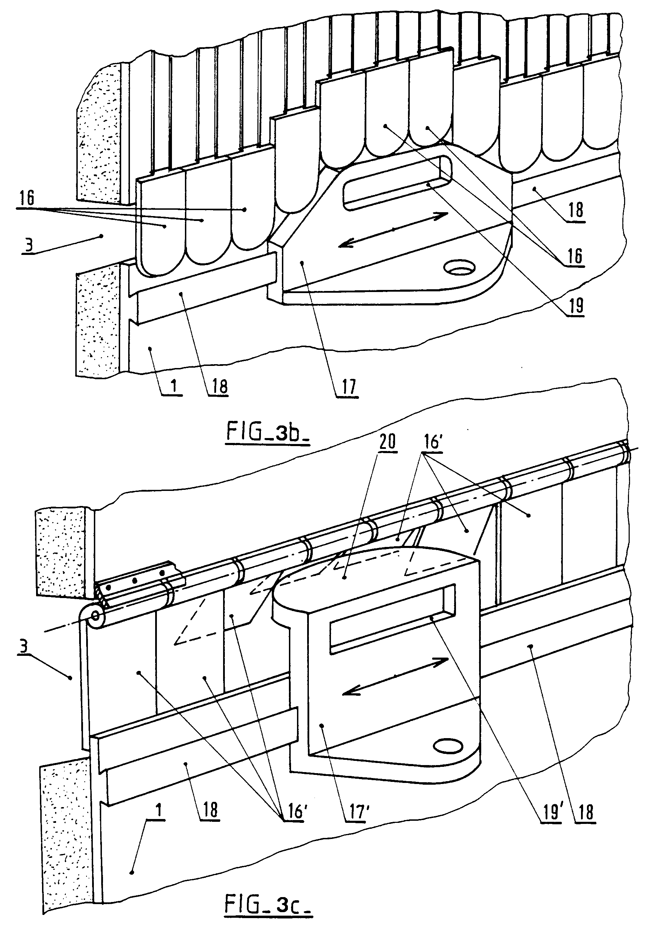

La figure 3b illustre un autre mode de réalisation dans lequel le moyen d'occultation 11 est constitué d'une série de languettes relevables 16, juxtaposées et montées librement et individuellement coulissantes sur la face externe du four 1 en regard de la fente 3.

Une pièce 17 mobile le long d'une glissière 18 ménagée en dessous de la fente 3, parallèlement à cette dernière, présente une fenêtre 19 en regard de la fente 3 pour le passage de la nappe de fils F (figure 3a). La pièce 17 est, comme la pièce 15, liée à la tête de bobinage 7 (non représentée sur la figure 3b).

La tranche supérieure de la pièce 17 est conformée pour glisser sous les extrémités inférieures arrondies des languettes 16 en les soulevant au passage pour permettre l'introduction des fils dans le four 1 par la fenêtre 19 et la fente 3.

La figure 3c est une variante du dispositif de la figure 3b dans laquelle les languettes 16' sont montées individuellement et librement basculantes autour d'un axe parallèle au bord supérieur de la fente 3 et au voisinage de ce bord.

La pièce 17' mobile le long de la glissière 18 et liée à la tête de bobinage, présente une fenêtre 19' analogue à la fenêtre 19 et commande par un bossage 20 tourné vers la fente 3 l'escamotage vers l'intérieur du four 1 des languettes 16' en regard, au fur et à mesure de son déplacement le long de la fente 3.

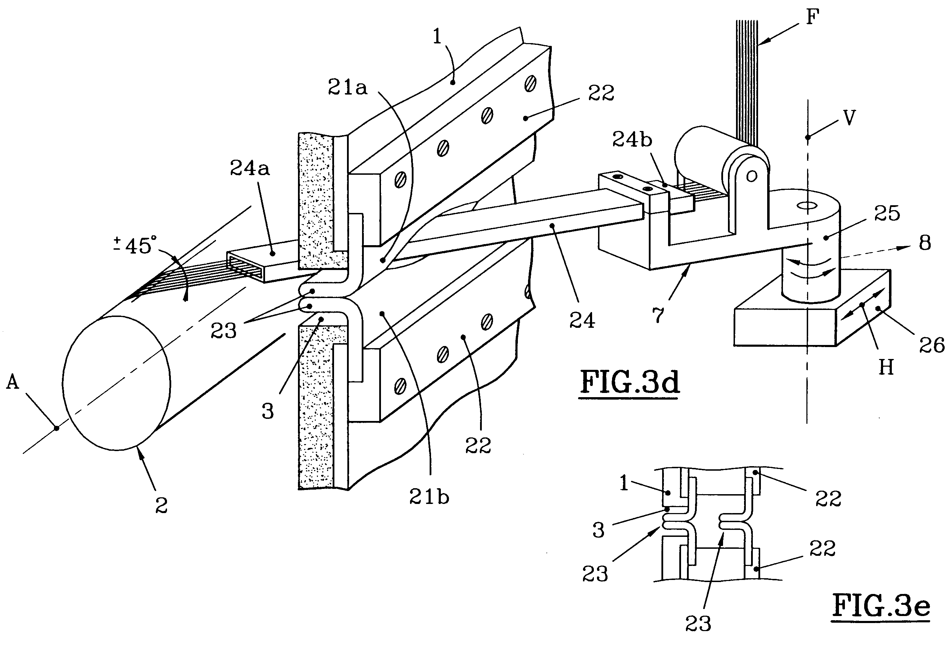

La figure 3d illustre encore un autre mode de réalisation des moyens d'occultation de le fente 3 du four 1.

La fente 3 est masquée sur toute sa longueur par deux éléments 21a et 21b en tissu de céramique ou autre matériau souple isolant, fixés par des pièces 22 sur la paroi externe du four. Les bords en regard des éléments sont repliés en lèvres 23 superposées dirigées vers l'intérieur du four 1, et s'appliquent élastiquement l'un contre l'autre.

Entre les lèvres 23 peut librement circuler un conduit-guide creux plat 24, dont une extrémité 24a se trouve en permanence à l'intérieur du four et dont l'autre extrémité 24b est fixée à la tête de bobinage 7.

Le conduit 24 est par exemple en céramique. Il est chargé de guider les fibres F de façon à tangenter le mandrin 2 dans le four 1 avec un angle de dépose, c'est-à-dire l'angle formé entre les fibres F issues du conduit 24 et l'axe A du mandrin 2, pouvant varier entre 90° (enroulement circonférentiel) et un angle inférieur à 90° et pouvant atteindre par exemple ± 45°.

A cet effet, la tête de bobinage 7 est montée de façon à pivoter autour d'un axe vertical V, orthogonal à l'axe de la fente 3, grâce à des moyens symbolisés en 25 permettant de faire pivoter la tête 7 sur le chariot 26 assurant le déplacement de la tête parallèlement à la fente 3 suivant la double flèche H. Les moyens 25 sont bien entendu reliés au poste 8 de commande et contrôle des étapes de bobinage.

Dans le dispositif de l'invention, le mandrin 2 est configuré pour l'obtention d'une pièce tubulaire cylindrique en matériau composite constitué d'une matrice vitreuse ou vitro-céramique renforcée de fibres.

Les fibres peuvent être de différentes natures, par exemple des fibres de SiC, C, Al₂O₃, SiO₂, Si₃N₄, etc...

La matrice vitreuse ou vitro-céramique peut être par exemple constituée d'au moins un oxyde de type SiO₂, Al₂O₃, ZrO₂, B₂O₃, ou d'oxydes alcalins ou alcalino-terreux.

Les fibres F sont des fibres pré-imprégnées des constituants de la matrice, à la manière connue, par exemple des fibres de carbure de silicium imprégnées de poudre de verre.

Préalablement au bobinage des fibres F sur le mandrin 2, le four 1 est porté à la température désirée, qui est au moins la température de ramollissement des constituants de la matrice.

Les fibres F sont bobinées sur le mandrin 2 placé dans le four 1 et entraîné en rotation par le moteur 6, en étant dévidées sous une tension déterminée, qui peut être nulle, la tête de bobinage 7 étant déplacée parallèlement à la fente 3.

Le bobinage des fibres F sur le mandrin 2 est effectué circonférentiellement (angle de bobinage 90°) et/ou suivant un angle de bobinage inférieur à 90° par rapport à l'axe du mandrin, en fonction des paramètres du bobinage (angle de bobinage, nombre de couches de fibres, tension des fibres).

Par fibres, on entend un fil formé d'un faisceau de filaments unidirectionnels, ou un ruban ou plusieurs fils ou rubans groupés en parallèle et bobinés simultanément, à partir d'une pluralité de bobines débitrices.

Pendant le bobinage, de l'azote N₂ peut être introduit en permanence dans le four 1 pour compenser les pertes par fuite à travers la fente 3. Un tel gaz neutre est nécessaire si les fibres F sont oxydables. De préférence, ce gaz sera chauffé avant introduction dans le four pour éviter tout choc thermique.

La température à l'intérieur du four 1 est maintenue constante pendant toute la durée du bobinage.

Cette température peut varier selon la nature de la matrice. S'il s'agit d'un verre de type "pyrex" la température du four sera de l'ordre d'au moins 800°C par exemple. Pour certains types de verre ou de vitro-céramique, la température pourra atteindre 1500°C.

La tension des fibres en cours de bobinage peut être réglée par exemple entre 0 et 10 Kg.

Pour obtenir une dépose locale circonférentielle sur le mandrin 2, ce dernier est entraîné en rotation autour de son axe par le moteur 6, le déplacement de la tête de bobinage 7 parallèlement à la fente 3 étant déterminé en fonction du pas de l'enroulement hélicoïdal des fibres sur le mandrin.

Grâce au déplacement de la tête de bobinage 7 parallèlement à la fente 3, le mandrin 2, quelle que soit sa longueur, peut être bobiné en totalité.

Les dispositifs des figures 3a à 3c permettent une telle dépose circonférentielle, ainsi qu'une dépose sous un angle légèrement inférieur à 90° ; il suffit de régler en conséquence le pas d'enroulement des fibres F sur le mandrin 2.

Si l'on veut réaliser des bobinages sous des angles substantiellement inférieurs à 90°, par exemple ± 45°, le dispositif de la figure 3d est utilisé. L'orientation de la tête 7 autour de l'axe V déplace le conduit 24 dans le plan de contact des lèvres 23 et donne l'angle de dépose des fibres F désiré sur le mandrin 2.

Au cours du bobinage, les fibres sont pressées de manière contrôlée et régulière sur la couche sous-jacente qu'elles recouvrent et en même temps traitées thermiquement dans des conditions d'homogénéité de température et d'absence de choc thermique propices à l'obtention, au cours du refroidissement après bobinage de la pièce ainsi constituée sur le mandrin 2, de conditions optimales pour la céramisation de la matrice de ladite pièce.

En particulier, les fibres F se déposent sur le mandrin 2 sur une couche de fibres dont les constituants de la matrice vitreuse ou vitro-céramique sont déjà ramollis, ce qui procure un bon plaquage des fibres et une compaction optimale, contrôlée et régulière, du matériau composite.

Dès que le bobinage est terminé, le four 1 est arrêté et commence à se refroidir dans des conditions contrôlées (durée, vitesse de refroidissement) en sorte d'obtenir une céramisation optimale de la matrice vitreuse ou vitro-céramique en fonction des caractéristiques désirées du matériau composite.

Le pilotage du refroidissement s'opère en agissant sur les éléments chauffants du four 1. Pendant le refroidissement l'atmosphère d'azote est maintenue dans le four. On peut éventuellement au cours du refroidissement effectuer une trempe à l'aide d'un fluide à température contrôlée, par exemple l'azote introduit dans le four ou un autre fluide, compatible avec la matrice vitreuse ou vitro-céramique.

Dans le mode de mise en oeuvre ci-dessus, les fibres F sont bobinées sur un mandrin cylindrique 2. Ce mandrin est par exemple en matériau approprié du type à base de carbone, voire réfractaire, enduit de graphite colloïdal ou de nitrure de bore, comme agent de démoulage.

La section du mandrin 2 peut être non-circulaire.

Le mandrin 2 peut d'une manière générale avoir une surface externe quelconque, par exemple cylindrique, sphérique, conique ou constituée d'une combinaison de ces formes.

La pièce bobinée sur le mandrin 2 et symbolisée par un manchon 27 (figure 1) peut, après usinage et finition, constituer directement une pièce finie, mais elle peut aussi constituer un semi-produit, c'est-à-dire un produit qui sera ultérieurement repris pour être découpé pour constituer une ou plusieurs pièces pouvant avoir des configurations diverses et qui feront l'objet d'un usinage et d'une finition individuels.

C'est ainsi qu'à partir d'une pièce 27 creuse bobinée sur un mandrin 2 de section pouvant être quelconque, par exemple de section lenticulaire, on peut découper dans la paroi de ladite pièce une pluralité d'éléments destinés à constituer des tuiles de protection thermique pour des corps de rentrée atmosphérique d'engins spatiaux.

En bobinant les fibres sous tension on pourra obtenir des pièces possédant de très bonnes caractéristiques mécaniques en plus de l'excellente tenue en température.

A la fin du processus de refroidissement, le mandrin 2 est enlevé du four 1.

Compte-tenu des dimensions que peut avoir le mandrin 2, la demi-coquille 1b du four est amovible en étant par exemple articulée sur la demi-coquille 1a et déplacée par des moyens de levage appropriés (non représentés).

Il est à noter que le mandrin sur lequel sont bobinées les fibres F pourrait être constitué par une structure existante, pouvant être complexe, et sur laquelle la matrice renforcée de fibres réalisée selon l'invention constituerait une enveloppe de frettage.

De même, ledit mandrin peut être remplacé par un noyau central d'une pièce sur lequel seront bobinées les fibres F, le noyau demeurant en place dans la pièce finale.

Dans les deux cas ci-dessus, la structure existante ou le noyau formant mandrin de bobinage, doivent être capables de supporter les températures du four 1.

Il est également à noter que les fibres F peuvent être éventuellement chauffées avant leur introduction dans le four 1, afin d'éviter les chocs thermiques.

Enfin, l'invention n'est évidemment pas limitée aux modes de mise en oeuvre représentés et décrits ci-dessus, mais en couvre au contraire toutes les variantes, notamment en ce qui concerne la nature des fibres; des matrices vitreuses ou vitro-céramiques, les paramètres de bobinage, les conditions de chauffage et de refroidissement du four 1, les formes et dimensions du mandrin 2 ou de son substitut, les conditions de traversée de la paroi du four par les fibres à déposer sur ledit mandrin ou analogue, ainsi que les moyens d'accès au four pour l'introduction et le retrait du mandrin et que les moyens d'occultation de la fente 3 pour réduire les fuites vers l'extérieur. C'est ainsi, en ce qui concerne le mode de réalisation de la figure 3d, que les éléments 21a, 21b formant les lèvres 23 peuvent être remplacés par tout moyen techniquement équivalent, c'est-à-dire définissant une interface étanche, souple, traversable par le conduit-guide 24, mobile dans le plan de ladite interface. Les éléments 21a, 21b peuvent être par exemple des élements en feutre ou des brosses, en particulier des joints-brosses.

En outre, pour une meilleure isolation thermique et une meilleure étanchéité, le rideau à lèvres des éléments 21a, 21b peut être éventuellement doublé comme illustré schématiquement par la figure 3e.

## Revendications

1. Dispositif de fabrication de matériaux composites à matrice vitreuse ou vitro-céramique renforcée de fibres, par bobinage sur un mandrin de fibres pré-imprégnées des constituants de ladite matrice, comprenant un four (1) muni de moyens d'accès pour introduire et retirer un mandrin de bobinage (2), des moyens (6) pour entraîner le mandrin en rotation autour de son axe à l'intérieur du four, des moyens (7) pour délivrer au mandrin à l'intérieur du four des fibres (F) à partir de bobines débitrices disposées à l'extérieur, via un moyen de passage ménagé dans la paroi dudit four et des moyens (8) pour commander et contrôler la délivrance des fibres et l'entraînement en rotation du mandrin, ledit dispositif étant caractérisé en ce qu'il comporte :
- un moyen de passage des fibres dans la paroi du four constitué par une fente (3) parallèle à l'axe du mandrin (2),
- une tête (7) de délivrance, à vitesse et tension déterminées, des fibres (F) au mandrin (2), via ladite fente (3), mobile en regard de ladite fente, et
- des moyens (8) pour commander et contrôler les moyens d'entraînement du mandrin et la tête de délivrance des fibres, en fonction des paramètres de bobinage.

2. Dispositif suivant la revendication 1, caractérisé en ce que le four (1) comporte des moyens (11) d'occultation de la fente (3) de passage des fibres (F) en dehors de l'endroit d'introduction des fibres.

3. Dispositif suivant la revendication 2, caractérisé en ce que lesdits moyens sont constitués d'une réglette (12) masquant la fente (3), montée coulissante le long de cette dernière en étant entraînée par une pièce de liaison (15) solidaire en déplacement de la tête (7) de bobinage des fibres, ladite réglette étant munie d'une fenêtre (14) de passage desdites fibres.

4. Dispositif suivant la revendication 2, caractérisé en ce que lesdits moyens sont constitués de languettes (16), individuelles, juxtaposées, relevables, masquant la fente (3) et soulevées au passage d'une pièce de liaison (17) solidaire en déplacement de la tête (7) de bobinage des fibres (F) et munie d'une fenêtre (19) de passage desdites fibres.

5. Dispositif suivant la revendication 2, caractérisé en ce que lesdits moyens sont constitués de languettes (16') individuelles, juxtaposées, montées basculantes autour d'un axe parallèle à l'un des bords de la fente (3) et escamotées par une pièce de liaison (17') solidaire en déplacement de la tête (7) de bobinage des fibres (F) et munie d'une fenêtre (19') de passage desdites fibres.

6. Dispositif suivant la revendication 2, caractérisé en ce que lesdits moyens sont constitués de lèvres en regard et en contact (23), en matériau souple approprié, traversées par un conduit (24) de guidage des fibres (F), porté par la tête de bobinage (7), cette dernière étant montée à la fois mobile parallèlement à la fente (3) et rotative autour d'un axe (V) orthogonal à l'axe de la fente, de manière à faire varier l'angle formé entre ledit axe de la fente et ledit conduit de guidage traversant ladite fente.

7. Dispositif suivant la revendication 6, caractérisé en ce que les lèvres (23) sont constituées par les bords repliés sur eux-mêmes en direction de l'intérieur du four, de deux éléments souples (21a, 21b) formés par un tissu ou un feutre.

8. Dispositif suivant la revendication 6, caractérisé en ce que les lèvres sont constituées par les bords en regard des deux éléments en forme de joints-brosses.

9. Dispositif suivant l'une quelconque des revendications 1 à 8, caractérisé en ce que les moyens de délivrance des fibres (F) sont une tête de bobinage multi-fils (7) à tension de fils contrôlée.

10. Dispositif suivant l'une quelconque des revendications 1 à 9, caractérisé en ce que le four (1) est muni de moyens (9) d'introduction contrôlée d'un gaz neutre.

11. Dispositif suivant la revendication 10, caractérisé en ce que le four (1) comporte un dispositif d'aspiration (10) des gaz s'échappant par ladite fente (3).

12. Dispositif suivant la revendication 10 ou 11, caractérisé en ce qu'il comporte des moyens pour chauffer le gaz neutre avant introduction dans le four (1).

## Claims

1. Device for the manufacture of composite materials based on a glass or glass-ceramic matrix reinforced with fibres, by winding fibres which have been pre-impregnated with the constituents of the said matrix onto a mandrel, comprising a furnace (1) equipped with means of access through which a winding mandrel (2) may be inserted and withdrawn, means (6) for rotating the mandrel around its axis inside the furnace, means (7) of delivering the fibres (F) to the mandrel when it is inside the furnace by supply reels disposed outside the furnace via a means of passage formed in the wall of the said furnace and means (8) of operating and controlling the supply of the fibres and the rotation of the mandrel, the said device being characterized in that it comprises :
- means of passage of the fibres formed in the wall of the furnace comprising a slot (3) which is parallel to the axis of the mandrel (2),
- a supply head (7), having a defined supply rate and tension, for supplying the fibres (F) to the mandrel (2), via the said slot (3), and which is mobile in relation to the said slot, and
- means (8) of operating and controlling the means of moving the mandrel and the fibre supply head, depending upon the parameters of winding.

2. Device as in claim 1, characterized in that the furnace (1) comprises means (11) of blocking the slot (3) through which the fibres (F) are passed, outside the place where the fibres are introduced.

3. Device as in claim 2, characterized in that said means are formed from a bar (12) which covers the slot (3) and which is mounted in such a way that it can slide along it, being moved by an integral joining piece (15), when the fibre winding head (7) is moved, the said bar being equipped with an aperture (14) through which the said fibres pass.

4. Device as in claim 2, characterized in that said means are formed from separate strips (16) which can be raised, and which are positioned side by side covering the slot (3); these are raised from the passage by an integral joining piece (17) when the winding head (7) of the fibres (F) is moved and equipped with an aperture (19) through which the said fibres pass.

5. Device as in claim 2, characterized in that said means are formed from separate strips (16'), positioned side by side, which are pivotally mounted around an axis parallel to one of the sides of the slot (3) and retracted by an integral joining piece (17') when the winding head (7) of the fibres (F) is moved and equipped with an aperture (19') through which the said fibres pass.

6. Device as in claim 2, characterized in that said means comprise lips (23) which are facing each other and in contact; the said lips (23) are made from a suitable flexible material, through which passes a duct (24) for guiding the fibres (F), borne by the winding head (7), this latter being mounted in such a way that it can move in parallel to the slot (3) and, at the same time, can rotate around an axis (V) which is perpendicular to the axis of the slot, in such a way as to change the angle formed between the said axis of the slot and the said guiding duct which passes through the said slot.

7. Device as in claim 6, characterized in that the lips (23) are formed from the edges of two flexible parts (21a, 21b), made from a fabric or felt, which are folded back on themselves, towards the interior of the furnace.

8. Device as in claim 6, characterized in that the lips are formed from the facing edges of two parts in the form of brush seals.

9. Device as in any of the claims 1 to 8, characterized in that the means of supplying the fibres (F) comprise a multi-thread winding head (7) with fibre tension control.

10. Device as in any of the claims 1 to 9, characterized in that the furnace (1) is equipped with means (9) of controlled introduction of a neutral gas.

11. Device as in claim 10, characterized in that the furnace (1) comprises a device (10) for evacuating the gases which escape from the said slot (3).

12. Device as in claim 10 or 11, characterized in that it comprises a means of heating the neutral gas before it is introduced into the furnace (1).

## Patentansprüche

1. Vorrichtung zur Herstellung von Verbundwerkstoffen mit faserverstärkter Glas- oder Glaskeramikmatrix durch Wickeln von vorimprägnierten, die Matrix bildenden Fasern auf einen Dorn, umfassend einen Ofen (1) mit Zutrittsmitteln zum Einführen und Entnehmen eines Wickeldorns (2), Mitteln (6) zum Drehen des Dorns um seine Achse im Innern des Ofens, Mitteln (7) zum überführen von Fasern (F) von außen angeordneten Abgabebobinen auf den Dorn im Innern des Ofens über Mittel zum Hindurchführen, die in der Wandung des Ofens angeordnet sind, und Mitteln (8) zum Steuern und Kontrollieren der Faserabgabe und des Drehantriebs des Dorns, wobei die Vorrichtung dadurch gekennzeichnet ist, daß sie umfaßt:
- ein Durchtrittsmittel für Fasern in der Wandung des Ofens, gebildet durch einen Schlitz (3) parallel zur Achse des Dorns (2),
- einen Kopf (7) zur Abgabe von Fasern (F) mit vorbestimmter Geschwindigkeit und Spannung zum Dorn (2) durch den Schlitz (3), der in bezug auf den Schlitz beweglich ist, und
- Mittel (8) zum Steuern und Kontrollieren der Mittel zum Antreiben des Dorn und des Kopfes zur Abgabe von Fasern als Funktion von Wickelparametern.

2. Vorrichtung nach Anspruch 1, dadurch gekennzeichnet, daß der Ofen (1) Mittel (11) zum Verdecken des Schlitzes (3) für den Durchtritt von Fasern (F) außerhalb der Eintrittsstelle der Fasern aufweist.

3. Vorrichtung nach Anspruch 2, dadurch gekennzeichnet, daß diese Mittel durch eine Leiste (12) gebildet werden, die den Schlitz (3) abdeckt und längs des letzteren verschiebbar montiert ist, indem sie durch ein Verbindungsstück (15) antreibbar ist, das in bezug auf die Verschiebung des Kopfes (7) zum Wickeln von Fasern fest verbunden ist, wobei die Leiste mit einem Fenster (14) für den Durchtritt der Fasern versehen ist.

4. Vorrichtung nach Anspruch 2, dadurch gekennzeichnet, daß die Mittel durch individuelle, nebeneinander angeordnete, hochstellbare Laschen (16) gebildet werden, die den Schlitz (3) abdecken und während des Durchlaufs eines Verbindungsstücks (17), das mit der Verschiebung des Kopfs (7) zum Wickeln von Fasern (F) fest verbunden und mit einem Fenster (19) für den Durchtritt der Fasern versehen ist, angehoben sind.

5. Vorrichtung nach Anspruch 2, dadurch gekennzeichnet, daß die Mittel durch individuelle, nebeneinander und um eine Achse parallel zu einem der Ränder des Schlitzes (3) schwenkbar angeordnete Leisten (16') gebildet werden, die durch ein Verbindungsstück (17'), das mit der Verschiebung des Kopfs (7) zum Wickeln von Fasern (F) fest verbunden und mit einem Fenster (19') für den Durchtritt der Fasern versehen ist, verschwenkt sind.

6. Vorrichtung nach Anspruch 2, dadurch gekennzeichnet, daß die Mittel durch gegenüber angeordnete und miteinander in Berührung befindliche Lippen (23) aus geeignetem weichem Material gebildet werden, die von einer Führung (24) zum Führen von Fasern (F) durchsetzt sind, die von dem Kopf (7) zum Wickeln von Fasern (F) getragen wird, wobei letzterer parallel zum Schlitz (3) und um eine Achse (V) senkrecht zur Achse des Schlitzes derart beweglich ist, daß der zwischen der Achse des Schlitzes und der Führung zum Führen, die den Schlitz durchsetzt, variierbar ist.

7. Vorrichtung nach Anspruch 6, dadurch gekennzeichnet, daß die Lippen (23) durch Ränder von zwei weichen, durch ein Gewebe oder einen Filz gebildeten Elementen (21a, 21b) gebildet werden, die auf sich selbst in Richtung zum Ofen umgebogen sind.

8. Vorrichtung nach Anspruch 6, dadurch gekennzeichnet, daß die Lippen (23) durch gegenüberliegende Ränder von zwei Elementen in Form von Bürstendichtungen gebildet werden.

9. Vorrichtung nach einem der Ansprüche 1 bis 8, dadurch gekennzeichnet, daß die Mittel zum Abgeben von Fasern (F) ein Vielfaserwickelkopf (7) mit kontrollierter Faserspannung sind.

10. Vorrichtung nach einem der Ansprüche 1 bis 9, dadurch gekennzeichnet, daß der Ofen (1) mit Mitteln (9) zum kontrollierten Einführen eine neutralen Gases versehen ist.

11. Vorrichtung nach Anspruch 10, dadurch gekennzeichnet, daß der Ofen (1) eine Zuführeinrichtung (10) für durch den Schlitz (3) entweichendes Gas aufweist.

12. Vorrichtung nach Anspruch 10 oder 11, dadurch gekennzeichnet, daß sie Mittel zum Erwärmen des neutralen Gases vor dem Einführen in den Ofen (1) aufweist.
